(19) Europäisches Patentamt
European Patent Office
Office européen des brevets

(11) **EP 1 986 081 A1**

(12) **EUROPEAN PATENT APPLICATION**

(43) Date of publication:
**29.10.2008 Bulletin 2008/44**

(51) Int Cl.:
***G06F 3/033*** *(2006.01)*     ***G06F 3/048*** *(2006.01)*

(21) Application number: **08100330.3**

(22) Date of filing: **10.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **23.04.2007 KR 20070039438**

(71) Applicant: **SAMSUNG ELECTRONICS CO., LTD.
Suwon-si,
Gyeonggi-do (KR)**

(72) Inventor: **Eom, Ju-il
Gyeonggi-do (KR)**

(74) Representative: **Brandon, Paul Laurence
APPLEYARD LEES
15 Clare Road
Halifax HX1 2HY (GB)**

(54)     **Device for user interface using rotatable input device and method of operating user interface**

(57)     Provided are a device for a user interface for efficient navigation and a method of operating the device interface. The device for a user interface includes a rotatable input device (310) which is manipulated by a user, a contact detection device (350) which detects whether the user contacts the rotatable input device and generates a first input signal if it is detected that that the user contacts the rotatable input device, a rotation detection device (330) which detects a rotation of the input device and generates a second input signal if the rotation of the input device is detected, and a control device (240) which performs a first operation based on at least one of the first and second input signals.

FIG. 3C

Printed by Jouve, 75001 PARIS (FR)

**Description**

**BACKGROUND OF THE INVENTION**

1. Field of the Invention

The present invention relates to devices for user interfaces, methods of operating user interfaces, and computer readable recording media having recorded thereon a program for executing the method of operating the user interface.

2. Description of the Related Art

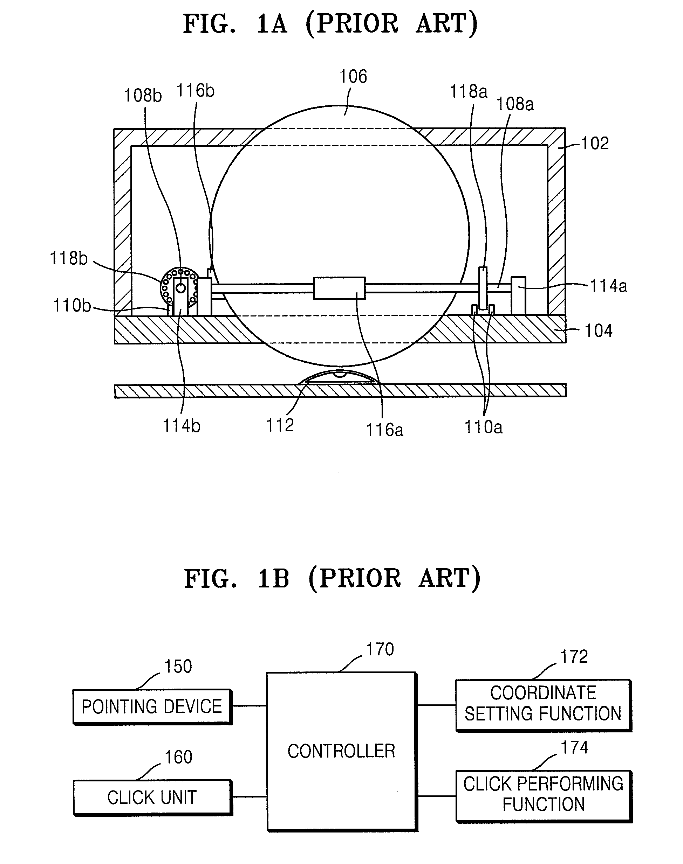

FIG. 1A is a diagram illustrating a related art input device using a track ball.

The conventional input device includes an upper housing 102, a lower housing 104, a ball 106, an x-axis member 108a, a y-axis member 108b, rotation detection sensors 110a and 110b, and a switch member 112.

The upper housing 102 and the lower housing 104 are assembled to be separable. Uniform portions of the ball 106 are exposed outside the upper housing 102 and the lower housing 104 so that the ball 106 can be rotated from the outside.

The x-axis member 108a and the y-axis member 108b are supported by supporting units 114a and 114b, respectively, in such a way that both end parts of the x-axis member 108a and the y-axis member 108b are rotatable. In the x-axis member 108a and the y-axis member 108b, there are provided contact members 116a and 116b, which substantially contact the ball 106 and enable the x-axis member 108a and the y-axis member 108b to rotate, and rotational plates 118a and 118b, which enable the rotation detection sensors 110a and 110b to recognize rotations of the x-axis member 108a and the y-axis member 108b.

Using the related art input device illustrated in FIG. 1A, a cursor on a monitor screen (not shown) can be moved by rotating the ball 106. A user presses the ball 106 to operate the switch member 112. An icon or a menu on the monitor screen can be selected by operating the switch member 112, and thus a function desired by the user can be performed.

The ball 106 and the switch member 112 are disposed to maintain a slight space therebetween. When the ball 106 rotates, the contact members 116a and 116b, contacting the ball 106, rotate, and thus the x-axis member 108a and the y-axis member 108b rotate. When the x-axis member 108a and the y-axis member 108b rotate, the rotational plates 118a and 118b rotate together. The rotations of the rotational plates 118a and 118b are detected by the rotation detection sensors 110a and 110b, and the signal is transmitted to a controller. Accordingly, the cursor on the monitor screen can move.

Also, using the related art input device illustrated in FIG. 1A, a click function, which selects a menu, etc., is performed by pressing the ball 106 once, a selected program is executed by pressing the ball 106 twice in quick succession, and a drag function is performed by rolling the ball 106 while pressing the ball 106.

FIG. 1B is a diagram for describing a conventional method of operating a track ball. The method will now be described with reference to FIGS. 1A and 1B.

The method is performed using a pointing device 150, a click unit 160, a controller 170, a coordinate setting function 172, and a click performing function 174.

When the ball 106 is rotated, the rotation detection sensors 110a and 110b detect the rotations of the x-axis and y-axis members 108a and 108b, so that the pointing device 150 generates a signal to move a cursor to a corresponding location, and transmits the signal to the controller 170.

By pressing the ball 106 so that the ball 106 touches the switch member 112, the click unit 160 generates a signal to perform a corresponding function, and transmits the signal to the controller 170.

When the controller 170 receives the signal from the pointing device 150, the coordinate setting function 172, which moves a cursor on a monitor screen, is performed, and when the controller 170 receives the signal from the click unit 160, the click performing function 174, which selects an icon or a menu, is performed.

Various types of input devices, such as a mouse, and a four direction input device used in remote controllers, track balls, joysticks, etc., are known in the related art. However, it is difficult to install such related art input devices in portable devices due to their large volume, and suitability of interfaces differs according to content.

**SUMMARY OF THE INVENTION**

Peferred embodiments of the present invention aim to provide an input device which can be miniaturized, easily operated, and realize various functions, a device for a user interface including the input device, a method of operating the user interface, and a computer readable recording medium having recorded thereon a program for executing the method of operating the user interface.

According to an aspect of the present invention, there is provided a device for a user interface, including: a rotatable input device, which receives an input of a user; a contact detection device, which detects whether the user has contacted one side of the rotatable input device and generates a first input signal based on the detection; a rotation detection device, which detects a rotation of the input device and generates a second input signal corresponding to the rotation; and a control device, which performs a predetermined operation based on the first and second input signals.

The contact detect device may be a voltage regulator type sensor.

The rotatable input device may be in the form of a ball.

The device may further include a click detect device, which generates a third input signal by detecting whether the rotatable input device is pressed.

The device may further include a lower part, which is connected to and supports the bottom of the contact detect device and the rotation detect device; and an upper part, which is connected to the top of the rotation detect device and the contact detect device, engaged with the lower part, and supports the rotatable input device, wherein the lower part may include a click detect device which generates a third input signal by detecting whether the upper part is pressed.

The device may further include a display device, which displays predetermined information to a user based on the operation of the control device.

The control device may display help information, related to operations that can be performed via the rotatable input device, on the display device, when only the first input signal is generated.

The second input signal may be a direction key signal corresponding to a movement of the rotatable input device.

The control device may move a current location displayed on the display device based on the second input signal, when the first input signal and the second input signal are simultaneously generated.

The control device may move a current location displayed on the display device based on the second input signal, when the amount of rotation of the rotational input device is more than a threshold value.

The control device may transmit a feedback signal indicating that the corresponding operation has been performed, when the current location displayed on the display device is moved based on the second input signal.

The control device may continuously move a current location displayed on the display device based on the second input signal, when the second input signal disappears and only the first input signal is left after the first and second input signals are generated together.

The control device may select an item corresponding to a current location displayed on the display device, when the first input signal and the third input signal are simultaneously generated.

The control device may display information about detailed items on the display device, when the first and third input signals are continuously generated for a predetermined threshold time or more.

The control device may move to an upper category of an item that is currently being displayed on the display device, when the first and third input signals are continuously generated for a predetermined threshold time or more.

The control device may select all of the items corresponding to a movement route of a current location on the display device based on the second input signal, when the first, second, and third input signals are simultaneously generated.

The control device may enlarge or reduce an item that is being displayed based on the second input signal, when the first, second, and third input signals are simultaneously generated.

The control device may enlarge the item when the second input signal is generated by the rotatable input device rotating to an upper direction, and reduces the item when the second input signal is generated by the rotatable input device rotating to a lower direction.

The control device may display a part, which was not displayed on the display device, on the display device when the first, second, and third input signals are simultaneously generated.

According to another aspect of the present invention, there is provided a method of operating a user interface, including: receiving an input of a user via a rotatable input device; detecting whether the user has contacted one side of the rotatable input device, and generating a first input signal based on the detection; detecting a rotation of the rotatable input device, and generating a second input signal corresponding to the rotation; and controlling a predetermined operation based on the first and second input signals.

## BRIEF DESCRIPTION OF THE DRAWINGS

The present invention will become more apparent by describing in detail exemplary embodiments thereof with reference to the attached drawings in which:

FIG. 1A is a diagram illustrating a related art input device using a track ball;

FIG. 1B is a diagram for describing a related art method of operating a track ball;

FIG. 2 is a block diagram illustrating a device for a user interface according to an exemplary embodiment of the present invention;

FIG. 3A is a side view of an input device according to an exemplary embodiment of the present invention;

FIG. 3B is a top view of an input device according to an exemplary embodiment of the present invention;

FIG. 3C is a structural diagram illustrating an input device according to an exemplary embodiment of the present invention;

FIG. 3D is a diagram illustrating an input device employing a click detection device at the bottom;

FIG. 4 is a flowchart illustrating a method of operating a user interface according to an exemplary embodiment of the present invention;

FIGS. 5A to 5I are diagrams for describing operations of an input device according to exemplary embodiments of the present invention;

FIGS. 6A to 6F are diagrams for describing a method of a user interface using a rotatable input device in a one-dimensional interface mode, according to an exemplary embodiment of the present invention;

FIGS. 7A to 7F are diagrams for describing a method of operating a user interface using a rotatable input device in a two-dimensional interface mode, according to an exemplary embodiment of the present invention;

FIGS. 8A to 8E are diagrams for describing a method of operating a user interface using a rotatable input device in a search interface mode, according to an exemplary embodiment of the present invention;

FIGS. 9A to 9F are diagrams for describing a method of operating a user interface using a rotatable input device in a three-dimensional interface mode, according to an exemplary embodiment of the present invention;

FIG. 10 is a flowchart illustrating a method of operating a user interface using a rotatable input device in an interface mode that requires discontinuous inputs, according to an exemplary embodiment of the present invention;

FIGS. 11A to 11E are diagrams for describing a method of operating a user interface using a rotatable input device in an interface mode that requires discontinuous inputs, according to an exemplary embodiment of the present invention; and

FIG. 12 is a flowchart illustrating a method of operating a user interface using a rotatable input device, according to an exemplary embodiment of the present invention.

## DETAILED DESCRIPTION OF EXEMPLARY EMBODIMENTS OF THE INVENTION

Hereinafter, the present invention will be described more fully with reference to the accompanying drawings, in which exemplary embodiments of the invention are shown.

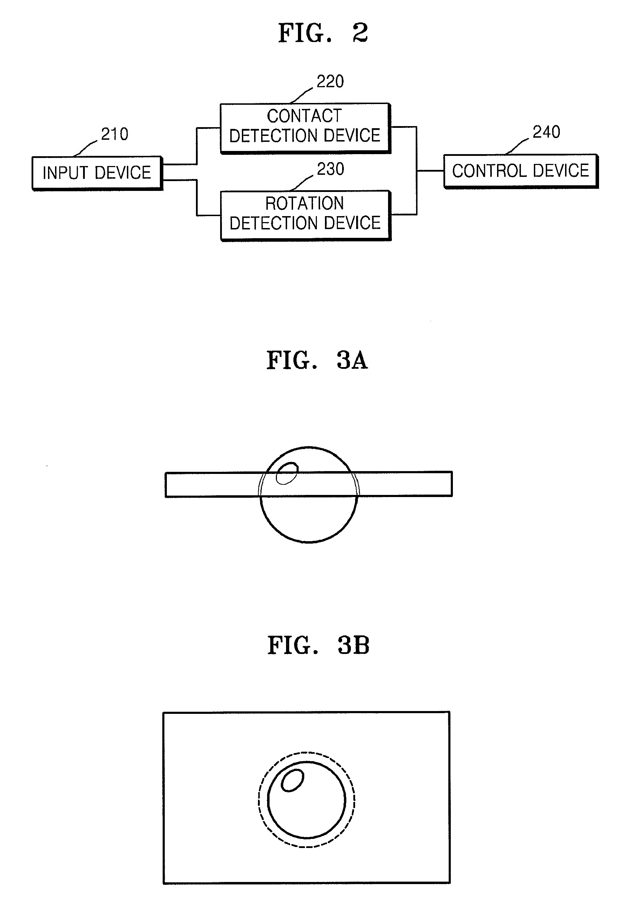

FIG. 2 is a block diagram illustrating a device for a user interface according to an exemplary embodiment of the present invention.

Referring to FIG. 2, the device includes an input device 210, a contact detection device 220, a rotation detection device 230, and a control device 240.

The input device 210 is a rotatable device, and can be realized in the form of a ball, but the form of the input device 210 is not limited thereto. A user can manipulate the device by contacting or rotating the input device 210. A detailed example of the input device 210 is illustrated in FIGS. 3A through 3C.

The contact detection device 220 detects whether the user has contacted one side of the input device 210, generates a corresponding input signal when it is determined that the user has contacted one side of the input device 210, and transmits the input signal to the control device 240. An example of the contact detection device 220 is a voltage regulator type sensor, but the present invention is not limited thereto. The voltage regulator type sensor detects whether the user has contacted one side of the input device 210 by detecting the flow of a current using a charger, such as a capacitor.

The rotation detection device 230 determines the rotation of the input device 210, generates a corresponding input signal, and transmits the input signal to the control device 240. The rotation detection device 230 may be realized in two detectors corresponding to an x-axis and a y-axis, respectively. When the input device 210 rotates, the two detectors corresponding to the x-axis and the y-axis can simultaneously rotate in order to generate the corresponding input signals.

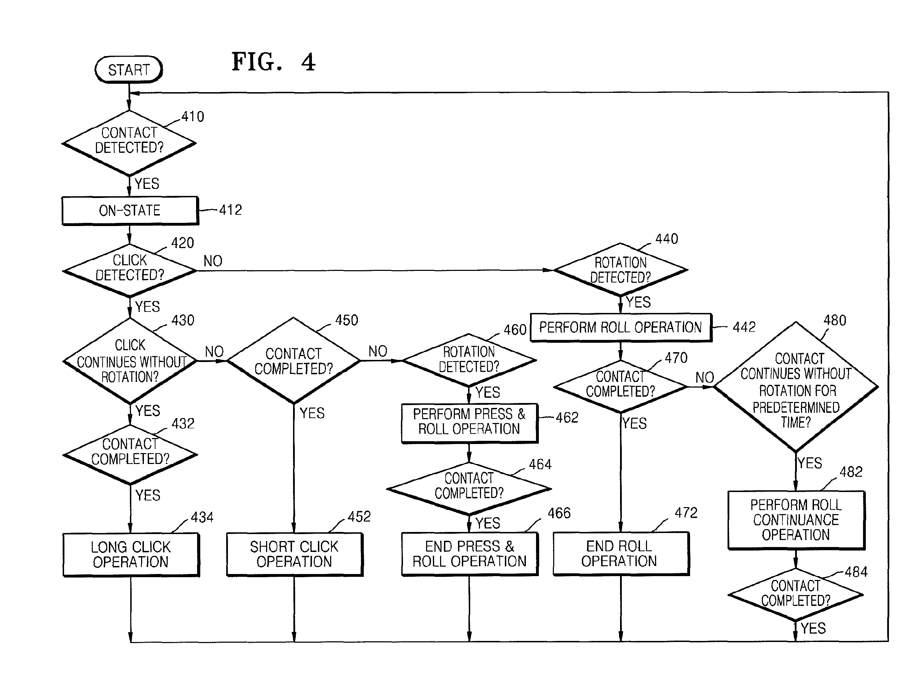

The control device 240 executes corresponding operations by receiving the input signals from the contact detect device 220 and the rotation detection device 230. The device may further include a display device (not shown), which generates a screen corresponding to the result of execution. Operations of the control device 240 will be described with reference to FIGS. 4 through 12 later.

FIG. 3A is a side view of an input device according to an exemplary embodiment of the present invention.

FIG. 3B is a top view of the input device according to an exemplary embodiment of the present invention.

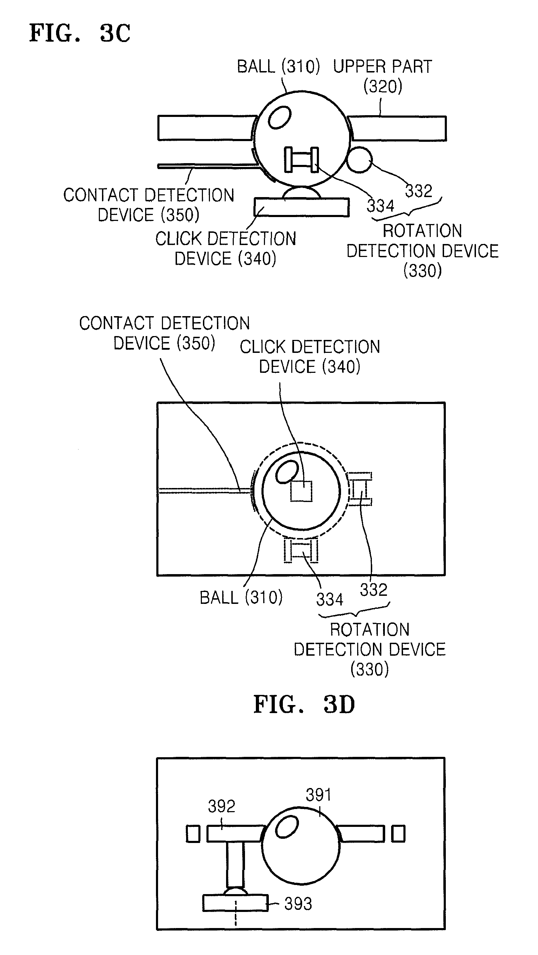

FIG. 3C is a structural diagram illustrating the input device according to an exemplary embodiment of the present invention.

The input device according to the current exemplary embodiment of the present invention includes a ball 310, an upper part 320, a rotation detection device 330, a click detection device 340, and a contact detection device 350.

The top of the upper part of the ball 310 protrudes so as to be manipulatable by a user. In the current exemplary embodiment, the ball 310 is employed as an input device, but other types of input device can be used, such as a touch pad. Examples of inputs applied to the ball 310 include contact, rotation, and clicking.

The upper part 320 supporting the ball 310 may be manipulated the user, such as by clicking the ball 310. In this case, the click detection device 340 can be disposed at the bottom of the upper part 320.

The rotation detection device 330 generates an input signal by detecting the rotation of the ball 310. The rotation detect device 330 may be realized through an x-axis rotation detection device 332 and a y-axis rotation detection device 334. When the user rotates the ball 310 in an x-axis direction, the x-axis rotation detect device 332 generates an input signal for moving a cursor in the x-axis direction by simultaneously rotating. Similarly, when the user rotates the ball 310 in the y-axis direction, the y-axis rotation detect device 334 generates an input signal for moving the cursor in the y-direction by simultaneously rotating.

The click detection device 340 generates an input signal by detecting whether the ball 310 is pressed. The click detection device 340 can be realized using an elastic body such as a spring. When the user presses the ball 310, the click detection device 340 generates an input signal, showing that the ball has been clicked, as a spring inside the click detection device 340 compresses. Alternatively, the input signal, showing that the ball has been clicked, is generated as the spring expands after being compressed.

The contact detection device 350 generates an input signal by detecting whether the user has contacted the ball 310. The contact detection device 350 may be an electric capacity type touch sensor. The electric capacity type touch sensor can be realized through a charger such as a capacitor. When the user contacts the ball 310, a current flows. Also, referring to FIG. 3D, a click detect device 393 can be realized in such a way that an input through an upper part 392, supporting an input device 391, is detected by being attached at the bottom of the upper part 392. Accordingly, the voltage regulator type sensor detects a reduction in electric charge, and thus generates an input signal.

FIG. 4 is a flowchart illustrating a method of operating a user interface according to an exemplary embodiment of the present invention.

In operation 410, a contact detection device determines whether a contact is detected. The contact is determined based on an operation such as a current flow in the ball 310 of FIG. 3C when a user's finger touches the ball 310. Operation 410 is repeated until a contact is detected, and when a contact is detected, operation 412 is performed.

When the contact is detected in operation 410, an on-state is entered such that help information related to operations that can be performed using the ball 310 is displayed in operation 412.

In operation 420, it is determined whether a click is detected. When a click is detected, operation 430 is performed and when a click is not detected, operation 440 is performed.

When a click is detected in operation 420, it is determined whether the click is performed without rotation for a predetermined time in operation 430. The predetermined time can be regulated according to a status of an interface or a user, and can be set up appropriately according to circumstances. In operation 430, the click is classified as a short click or a long click based on a time duration that the click is performed for.

When it is determined that the click is a long click in operation 430, a long click operation of operation 434 is performed as soon as the detection of the contact is completed in operation 432. According to an interface mode, the long click operation may display option items, display detailed items, or move to an upper category.

When it is determined that the click has not been performed for the predetermined time in operation 430, the completion of the contact is completed is determined in operation 450 in order to determine whether the user only clicked the ball 310 or clicked and rotated the ball 310 simultaneously. In other words, when the contact is completed and it is determined that the click is a simple click in operation 450, a short click operation is performed in operation 452. The short click operation may select, confirm, click, or reproduce an item according to an interface mode.

In operation 460, it is determined whether the rotation exists. When the rotation exists it is determined that the click and the rotation simultaneously exist, and thus a press and roll operation is performed in operation 462. In the press and roll operation, a plurality of items may be selected, moving a category or a screen may be performed, and an item may be enlarged or reduced according to an interface mode.

In operation 464, it is determined whether the contact is completed. When the contact is completed, the press and roll operation is completed in operation 466.

When a click is not detected in operation 420, it is determined whether a rotation is detected in operation 440. When a rotation is not detected, it is determined whether the contact is completed. When the contact is completed, the method is completed, and when the contact is not completed, operation 420 may be performed again. When a rotation is detected, a roll operation is performed in operation 442. In the roll operation, content in a current category may be searched or a current location may be moved according to an interface mode.

In operation 470, it is determined whether the contact is completed. When it is determined that the contact is completed, the roll operation is completed in operation 472. When the contact is not completed, continuance of the roll operation is determined in operation 480.

In operation 480, when the contact is not completed and at the same time, the rotation is not detected for a predetermined time, a roll continuance operation is performed in operation 482. In the roll continuance operation, content continues to be searched for in an input rotation direction, or the current location continues to be moved according to an interface mode.

It is determined whether the contact is completed in operation 484, and when the contact is completed, the roll continuance operation is completed.

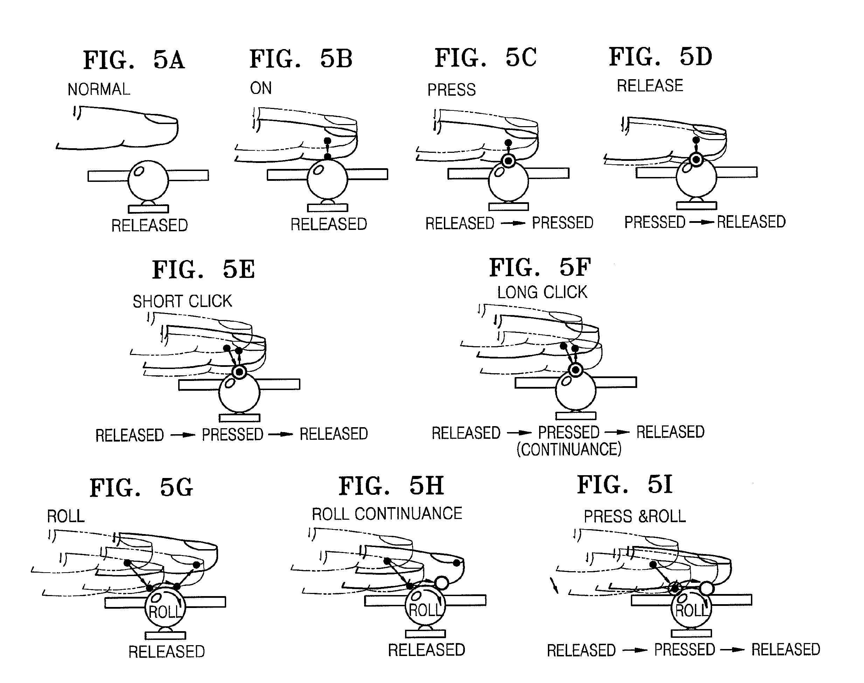

FIGS. 5A to 5I are diagrams for describing operations of an input device according to exemplary embodiments of the present invention.

FIG. 5A illustrates a normal state in which a user does not contact a ball of the input device.

FIG. 5B illustrates an on state in which the user contacts the ball.

FIG. 5C illustrates a press state in which the user has pressed the ball.

FIG. 5D illustrates a release state in which the user has completed contacting the ball and thus the ball is returned to its original location.

In FIG. 5E, a short click operation is performed by combining the press state and the release state. In detail, the short click operation is performed by the user pressing and then releasing the ball.

In FIG. 5F, a long click operation is performed by maintaining the press state for a predetermined time or more and then releasing the ball to enter the release state. In detail, the long click operation is performed by the user pressing the ball for a predetermined time and then releasing the ball.

In FIG. 5G, a roll operation is performed by rotating the input device. In detail, the roll operation is performed by rolling the ball without pressing the ball.

In FIG. 5H, a roll continuance operation is performed by rotating the input device and then stopping the rotation while contacting the input device. In detail, the roll continuance operation is performed by rolling the ball without pressing the ball, and continuing to contact the ball at a predetermined point.

In FIG. 5I, a press and roll operation is performed by combining the press state and the release state and rotating the input device simultaneously. In detail, the press and roll operation is performed by rolling the ball after pressing the ball.

Table 1 shows the operations of the input device described above.

Table 1

| Operation | Detailed Examples of Operation | Functions Performed According to Operation |
| --- | --- | --- |
| On State | Put a finger on the ball | Display help information about operations |
| Roll Operation | Roll a ball without pressing the ball | Search for content |
| Roll Continuance Operation | Roll the ball without pressing the ball and continue to contact the ball at a predetermined point | Continue to search for content |
| Press and Roll Operation | Roll the ball after pressing the ball | Select a plurality of items, search an upper concept, enlarge or reduce an item, and move a space |
| Short Click Operation | Remove a finger immediately after pressing the ball | Select, confirm, click, and reproduce an item |
| Long Click Operation | Remove a finger after pressing the ball for a predetermined time | Option, detailed items, prior category |

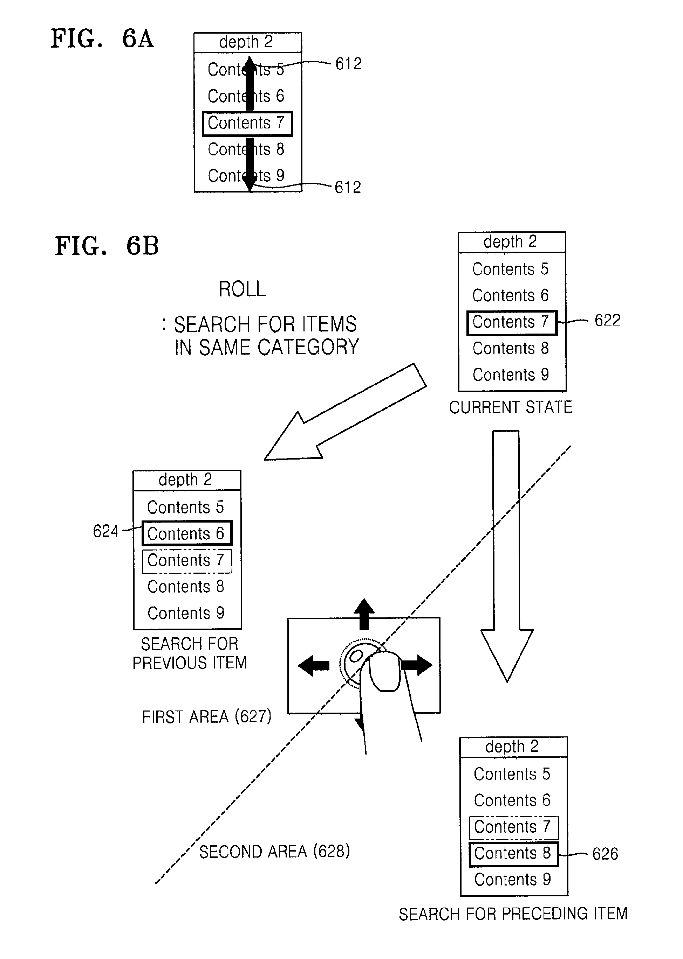

FIGS. 6A to 6F are diagrams for describing a method of operating a user interface using a rotatable input device in a one-dimensional interface mode, according to an exemplary embodiment of the present invention.

In the one-dimensional interface mode according to the current exemplary embodiment of the present invention, a user can perform 6 or more operations using the rotatable input device.

In FIG. 6A, a screen, that is being displayed, is turned to an on state by the user contacting the rotatable input device. Accordingly, help information 612 related to operations that can be performed using the rotatable input device is displayed. The help information 612 according to the current exemplary embodiment is shown graphically, but it may be shown in other forms, such as text.

In FIG. 6B, items in the same category are searched for by performing a roll operation in the one-dimensional interface mode.

In the one-dimensional interface mode according to the current exemplary embodiment of the present invention, rotation directions of the rotatable input device are divided into two areas. When a rotation corresponding to a first area 627 is input, the search is performed in an upper direction, and when a rotation corresponding to a second area 628 is input, the search is performed in a lower direction. In the current exemplary embodiment, the rotation directions are divided by a diagonal line from the upper right to the lower left of a screen, but the present invention is not limited thereto and the rotation directions can be divided by a horizontal or vertical line.

When the rotation corresponding to the first area 627 is input by the user performing the roll operation, a highlight box is moved to an item 624 one above a current item 622. When the rotation corresponding to the second area 628 is input by the user performing the roll operation, the highlight box is moved to an item 626 one below the current item 622.

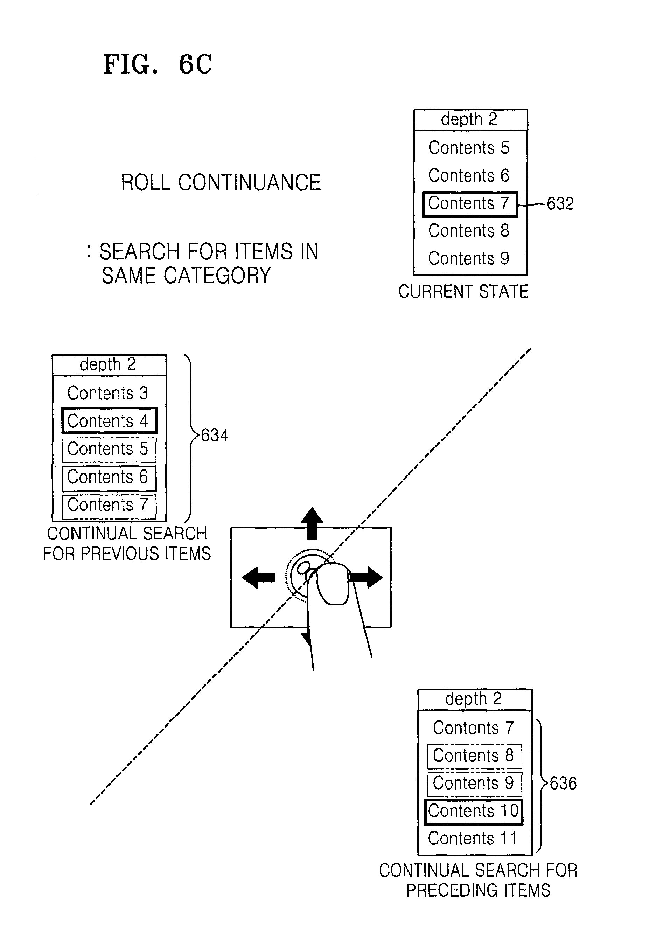

In FIG. 6C, items in the same category are continuously searched by performing a roll continuance operation in the one-dimensional interface mode.

When the user performs the roll continuance operation in order to input a rotation corresponding to a first area, a highlight box is continuously moved to an item 634 above a current item 632 until the user removes the hand from the rotatable input device. When the user performs the roll continuance operation in order to input a rotation corresponding to a second area, the highlight box is continuously moved to an item 636 below the current item 632.

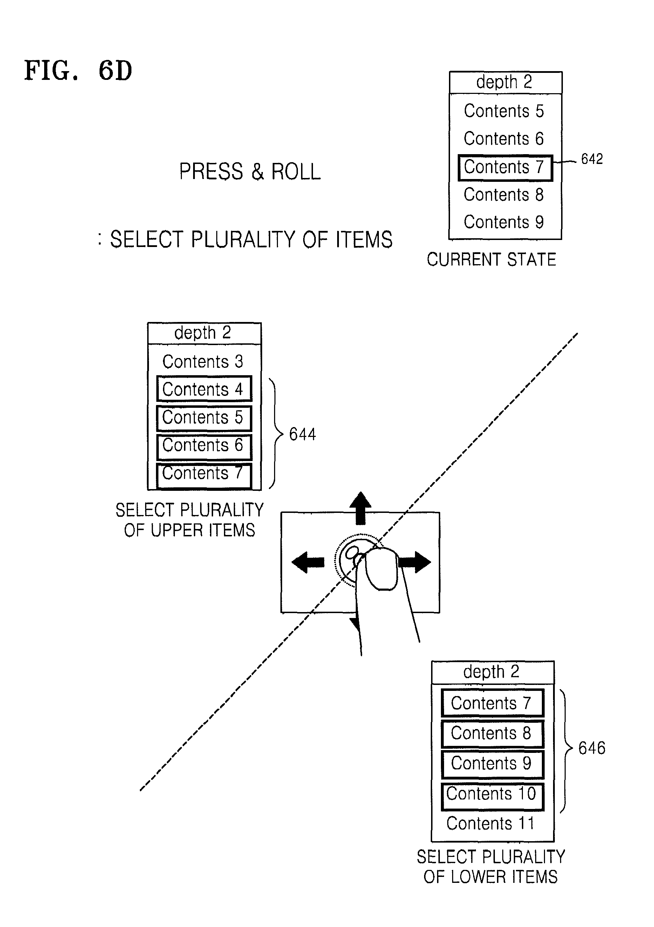

In FIG. 6D, a plurality of items in the same category are selected by performing a press and roll operation in the one-dimensional interface mode.

When the user performs the press and roll operation in order to input a rotation corresponding to a first area, a plurality of items are selected by highlighting a current item 642 and items 644 above the current item 642 until the user removes the hand from the rotatable input device. When the user performs the press and roll operation in order to input a rotation corresponding to a second area, a plurality of items are selected by highlighting the current item 642 and items 646 below the current item 642 until the user no longer contacts (i.e., removes the hand) from the rotatable input device.

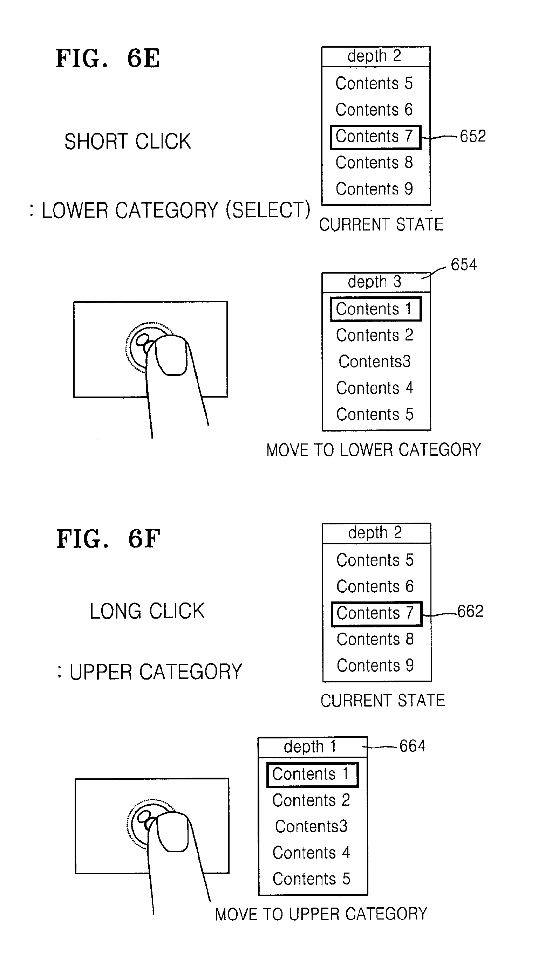

In FIG. 6E, when a short click operation is performed in the one-dimensional interface mode, a highlight box on an item 652 is moved to a lower category 654 of the item 652 or the item 652 that is highlighted is reproduced (not shown).

In FIG. 6F, when a long click operation is performed in the one-dimensional interface mode, a highlight box on an item 662 is moved to an upper category 664 of the item 662.

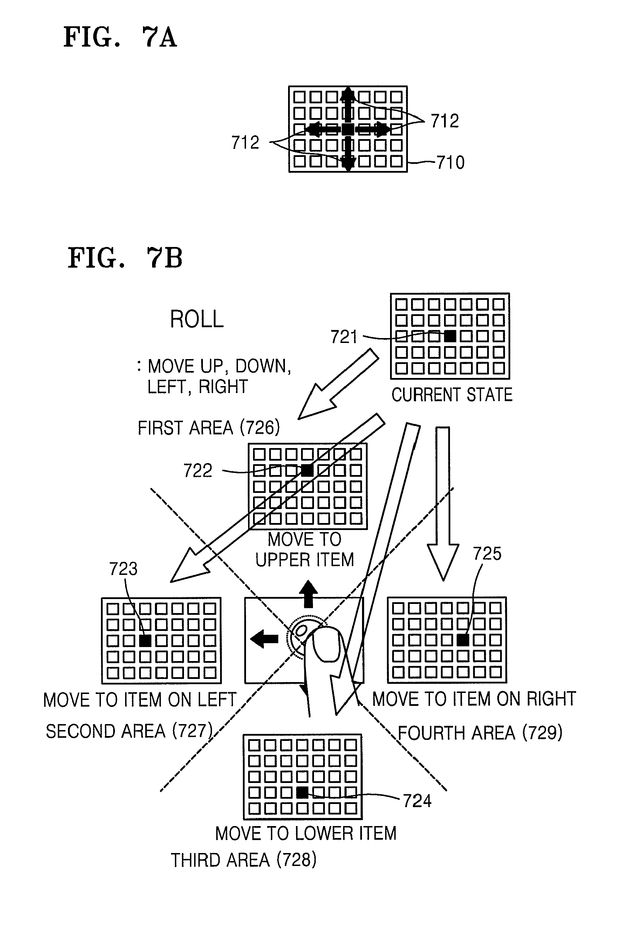

FIGS. 7A to 7F are diagrams for describing a method of operating a user interface using a rotatable input device in a two-dimensional interface mode, according to an exemplary embodiment of the present invention.

In FIG. 7A, a screen 710 that is being displayed is turned to an on-state by a user contacting the rotatable input device. Accordingly, help information 712 related to operations that can be performed via the rotatable input device is displayed.

In FIG. 7B, when a rotation corresponding to a first area 726 is input by performing a roll operation in the two-dimensional interface mode, a highlight box is moved to an item 722 one above a current item 721, and when a rotation corresponding to a second area 727 is input, the highlight box is moved to an item 723 one left of the current item 721.

When a rotation corresponding to a third area 728 is input by performing the roll operation, the highlight box is moved to an item 724 one below the current item 721, and when a rotation corresponding to a fourth area 729 is input, the highlight box is moved to an item 725 one right of the current item 721. A method of dividing rotation directions of the rotatable input device is not limited as described above.

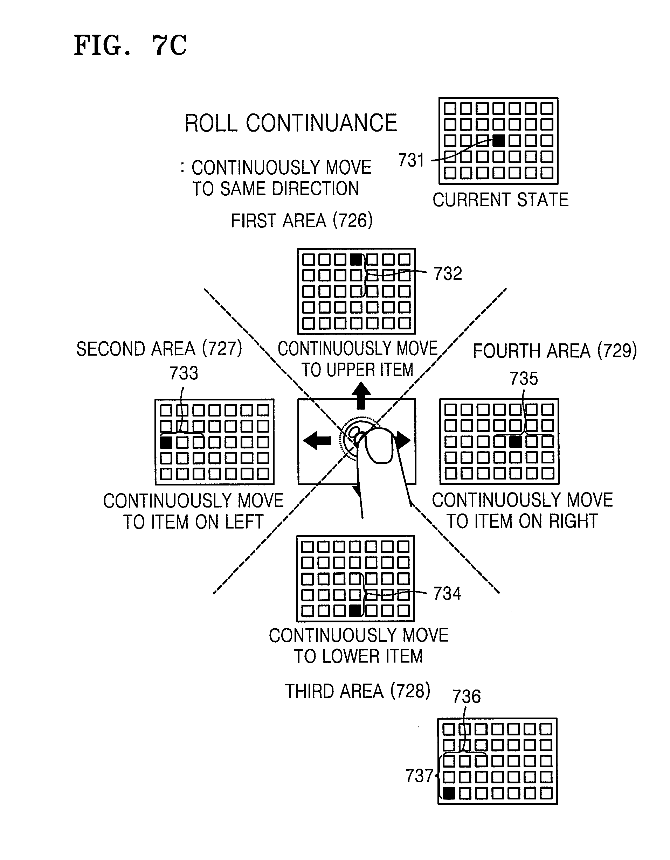

In FIG. 7C, when a rotation corresponding to a first area 726 is input by performing a roll continuance operation in the two-dimensional interface mode, a highlight box is continuously moved to an item 732 above a current item 731 until the user removes the hand from the rotatable input device. When a rotation corresponding to a second area 727 is input, the highlight box is continuously moved to an item 733 to the left of the current item 731, when a rotation corresponding to a third area 728 is input, the highlight box is continuously moved to an item 734 below the current item 731, and when a rotation corresponding to a fourth area 729 is input, the highlight box is continuously moved to an item 735 to the right of the current item 731.

In the current exemplary embodiment, the highlight box can be continuously moved even when the rotation corresponding to the third area 728 is input while the rotation corresponding to the second area 727 is input. For example, when the rotation corresponding to the third area 728 is input while the highlight box is moved to the item to the left of the current item 731 by receiving the rotation corresponding to the second area 727, the highlight box continuously moves to an item below the item.

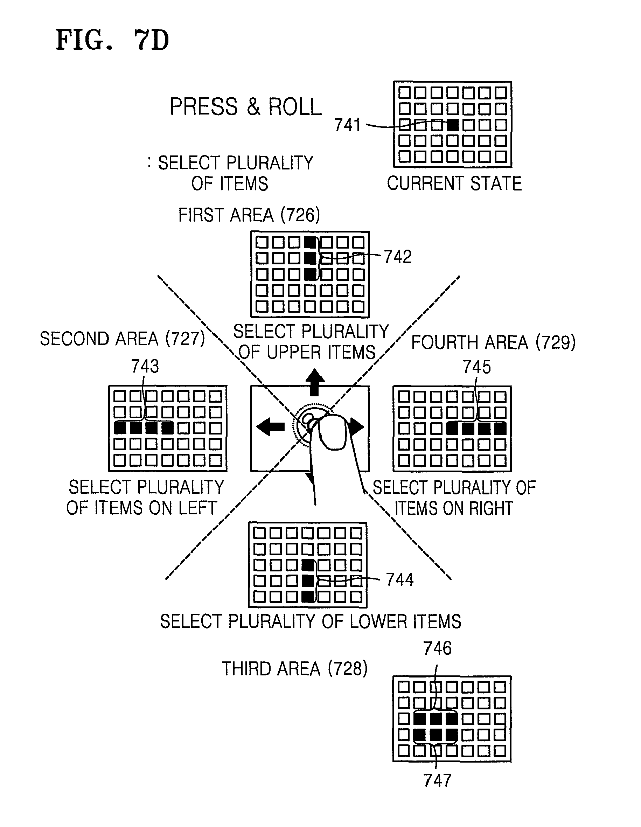

In FIG. 7D, a plurality of items in the same category are selected by performing a press and roll operation in the two-dimensional interface mode.

When a rotation corresponding to a first area 726 is input by performing the press and roll operation, a plurality of items are selected by highlighting a current item 741 and items 742 above the current item 741 until the user removes the hand from the rotatable input device. Similarly, a plurality of items are selected when a rotation corresponding to a second area 727, a third area 728, or a fourth area 729 is input by the user performing the press and roll operation.

In the current exemplary embodiment, items can be continuously selected even when the rotation corresponding to the third area 728 is input while the rotation corresponding to the second area 727 is input. For example, when the rotation corresponding to the third area 728 is input while highlighting the current item 741 and items 746 on the left of the current item 741 by receiving the rotation corresponding to the second area 727, items 747 below the items 746 are highlighted.

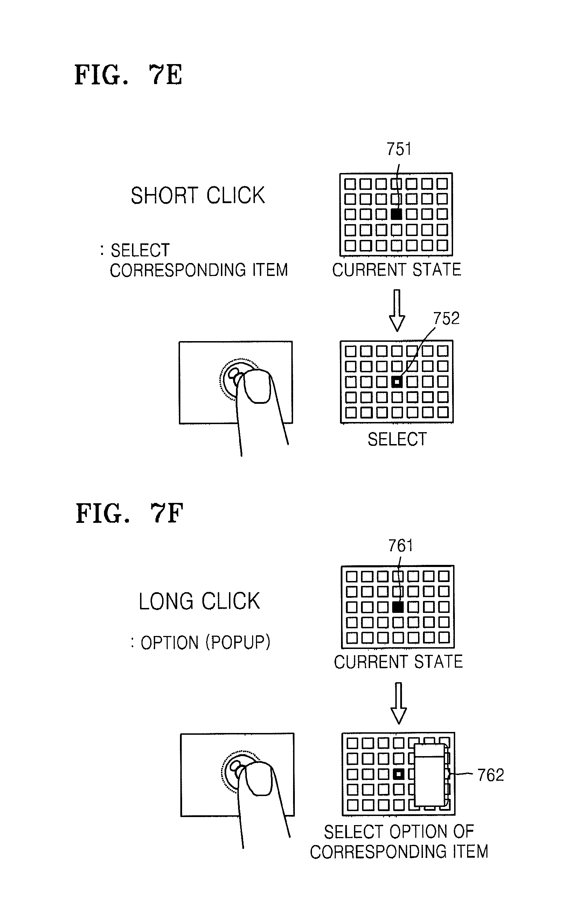

In FIG. 7E, when a short click operation is performed in the two-dimensional interface mode, an item 751 which is currently highlighted is selected, or the item 751 is reproduced (not shown).

In FIG. 7F, when a long click operation is performed in the two-dimensional interface mode, option information 762 of an item 761, which is currently highlighted, or information about detailed items (not shown) is displayed. The option information 762 may be displayed in a popup form, and it is obvious that various interface modes, such as a one-dimensional interface mode and a two-dimensional interface mode, can be employed in order to select an option.

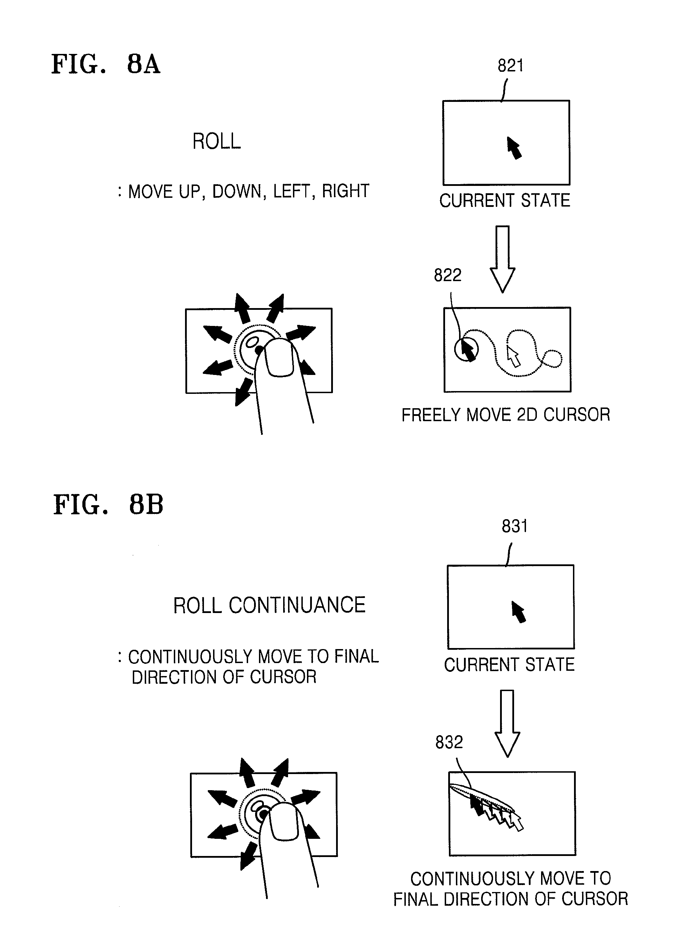

FIGS. 8A to 8E are diagrams for describing a method of operating a user interface using a rotatable input device in a search interface mode, according to an exemplary embodiment of the present invention.

In FIG. 8A, a screen 821 which is currently displayed is freely searched by performing a roll operation in the search interface mode. A cursor 822 of the screen 821 freely moves by detecting a rotation of the rotatable input device.

In FIG. 8B, by performing a roll continuance operation in the search interface mode, a cursor of a screen 831, which is currently displayed, is continuously moved in a direction 832 that the cursor was moving at the time the roll operation was completed, based on the rotation of the rotatable input device.

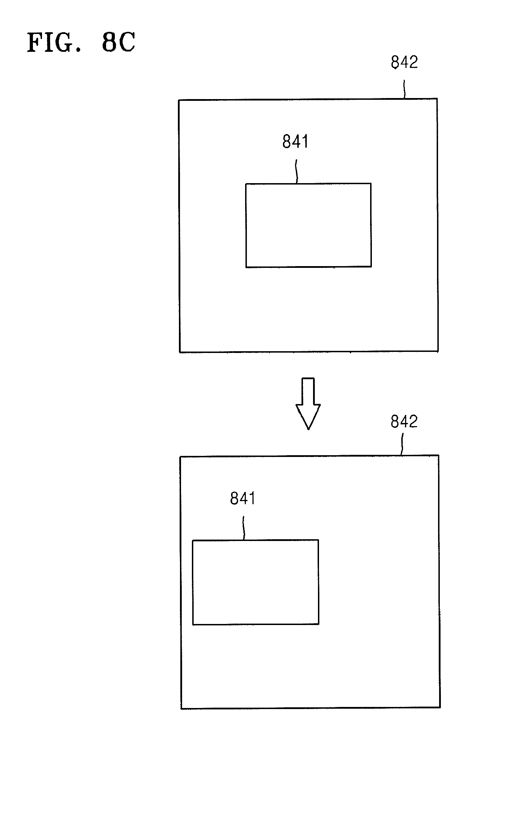

In FIG. 8C, a movement in a space is performed by performing a press and roll operation in the search interface mode. For example, when the size of a picture displayed is larger than a screen of a display, and thus only a part of the picture is displayed, the picture can be moved so that the remaining part of the picture can be displayed. When a user performs the press and roll operation and thus an input corresponding to a left direction is detected, the location of a picture 842 displayed on a current screen 841 is moved so that a left part of the picture 842 is displayed on the screen 842. According to a setting, when the input corresponding to the left direction is detected, the location of the picture 842 is moved so that a right part of the picture 842 is displayed on the screen 842.

For example, in the case of an apparatus, such as a navigation tool, which searches for an area in a map, when the map is formed of 1024*512 pixels and a display of the apparatus can display only 256*128 pixels, only an area of 256*128 pixels of the map is displayed and the remaining part cannot be displayed. In this case, the map can be moved so that a desired part is displayed by performing the press and roll operation.

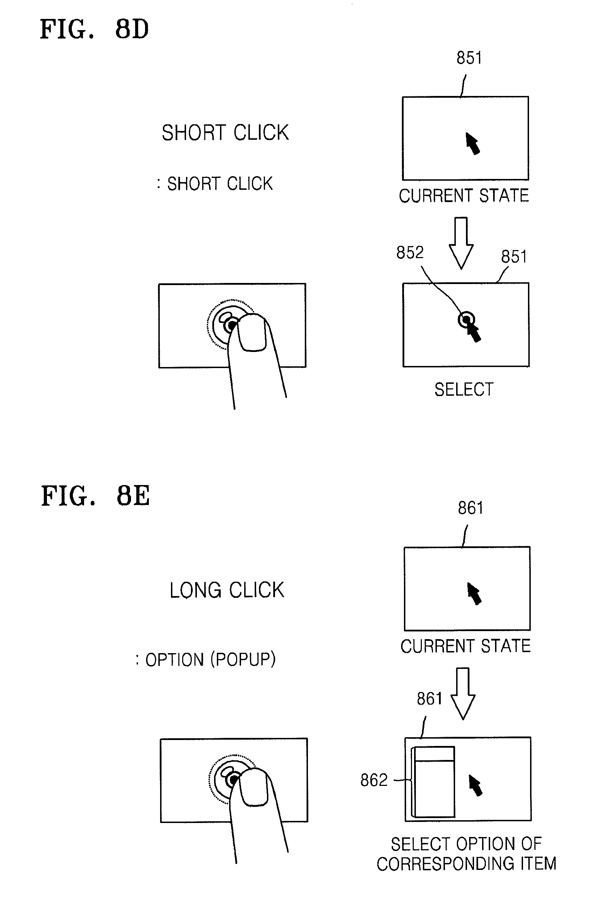

In FIG. 8D, an item (or a location) 852, which is pointed at by a cursor on a screen 851 that is being displayed, is selected by performing a short click operation in the search interface mode.

In FIG. 8E, information about details of operation information 862 is displayed on a screen 861 that is being displayed by performing a long click operation in the search interface mode.

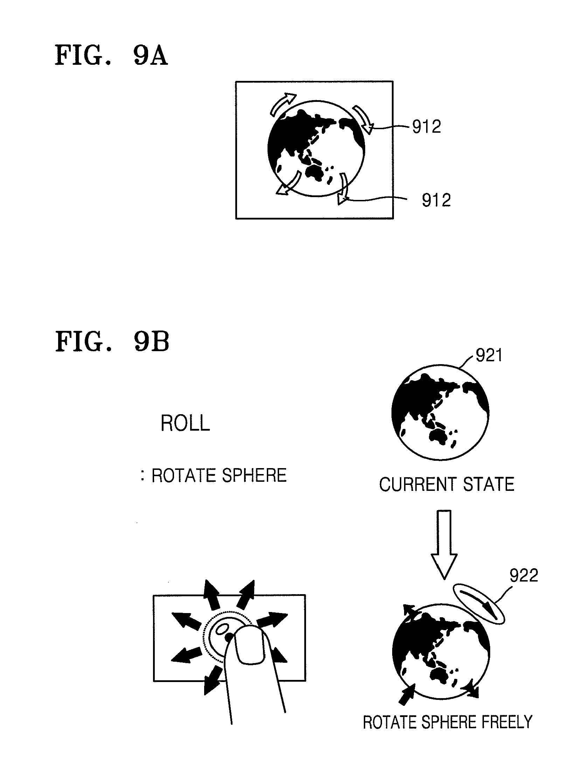

FIGS. 9A to 9F are diagrams for describing a method of operating a user interface using a rotatable input device in a three-dimensional interface mode, according to an exemplary embodiment of the present invention.

In FIG. 9A, the rotatable input device is turned to an on state by a user contacting the rotatable input device. Accordingly, help information 912 related to operations that can be performed in the rotatable input device is displayed.

In FIG. 9B, a three-dimensional search is performed by performing a roll operation in the three-dimensional interface mode. The current exemplary embodiment shows processes of searching a sphere. When a sphere is searched, the three-dimensional search can be performed by rotating the sphere in the same manner as rotating the rotatable input device. However, the use of the three-dimensional interface mode is not limited to a sphere.

When a rotatable input device rotates by performing a roll operation in a screen that is being displayed, a sphere 921 that is displayed rotates in a direction 922 corresponding to the rotation of the rotatable input device.

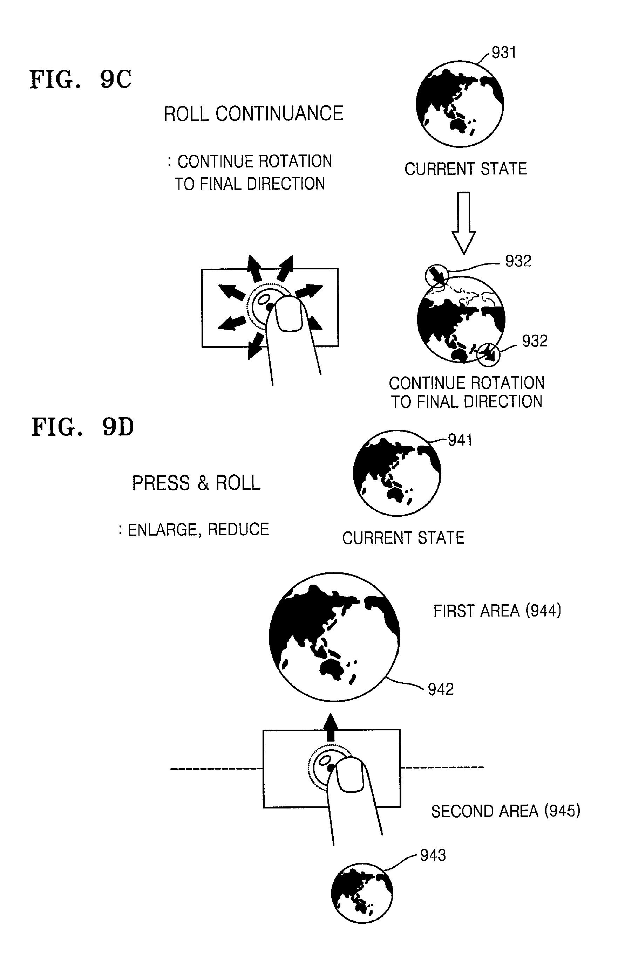

In FIG. 9C, when a roll continuance operation is performed in the three-dimensional interface mode in a screen that is being displayed, a sphere 931 that is displayed continuously rotates in a direction 932 that the rotating input device was rotating at the time the roll operation was completed.

In FIG. 9D, a sphere 941 that is displayed is enlarged (942) or reduced (943) by performing a press and roll operation in the three-dimensional interface mode.

In a screen that is being displayed, when a rotation corresponding to a first area 944 is input by performing the press and roll operation, the sphere 942 enlarges until a user removes the hand from the rotatable input device. Similarly, when a rotation corresponding to a second area 945 is input by performing the press and roll operation, the sphere 943 reduces until the user removes the hand from the rotatable input device.

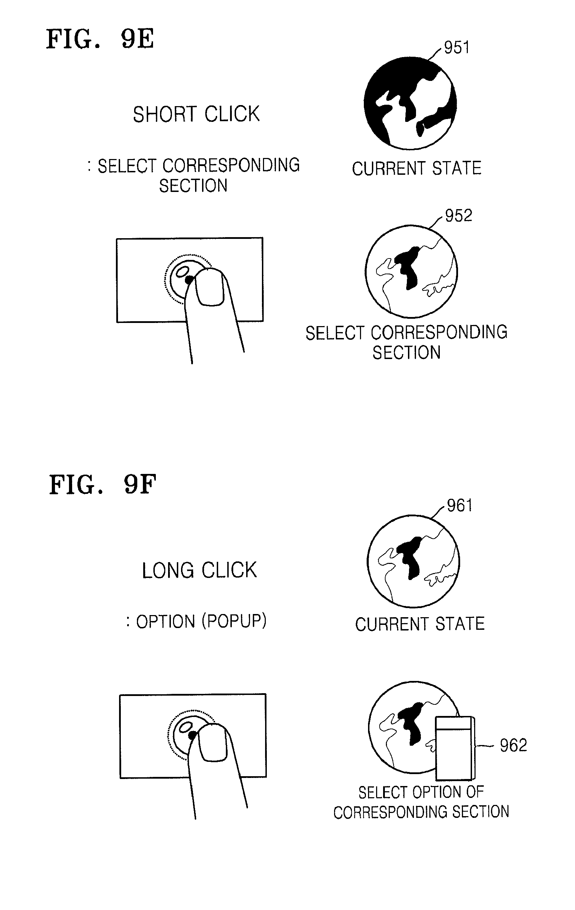

In FIG. 9E, a current item (or location) is selected by performing a short click operation in the three-dimensional interface mode. In the current exemplary embodiment, a corresponding section 952 that a cursor is currently pointing at is selected by performing the short click operation in a screen that is displaying a sphere 951.

In FIG. 9F, information related to details of option information 962 is displayed by performing a long click operation in a screen that is displaying a sphere 961 in the three-dimensional interface mode.

Table 2 shows examples of operations of a rotatable input device in interface modes described above.

Table 2

| Operation | One-Dimensional Interface | Two-Dimensional Interface | Search Interface | Three-Dimensional Interface |
|---|---|---|---|---|
| On State | Help Information | Help Information | Help Information | Help Information |
| Roll Operation | Search for Items | Search Up, Down, Right, Left | Move Cursor Freely | Rotate Sphere |
| Roll Continuance Operation | Continue to Search for Items | Rapidly Search Up, Down, Right, Left | Continue to Move to Final Direction | Continue to Rotate Sphere |
| Press & Roll Operation | Select Plurality of Items | Select Plurality of Items | Move Space | Enlarge or Reduce |
| Short Click Operation | Move or Select Lower Category | Select | Select or Appoint | Select |
| Long Click Operation | Move to Upper category | Display Option Information | Display Option Information | Display Option Information |

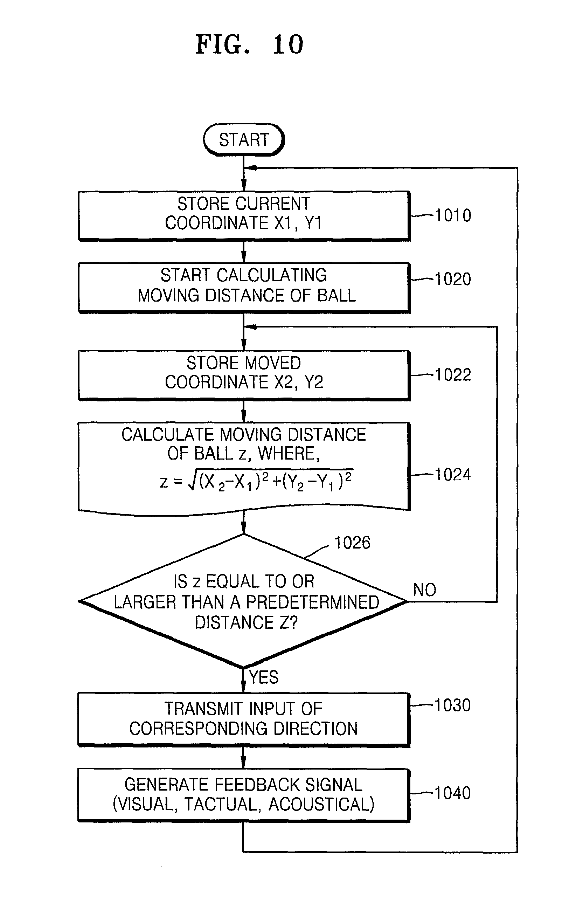

FIG. 10 is a flowchart illustrating a method of operating a user interface using a rotatable input device in an interface mode that requires discontinuous inputs according to an exemplary embodiment of the present invention.

In operation 1010, a current coordinate (X1, Y1) is stored. The current coordinate may be set as (0,0) or may be set based on a current location of a cursor or the location of the rotatable input device. In the current exemplary embodiment, the current coordinate is set as starting locations of the x-axis rotation detection device 332 and the y-axis rotation detection device 334 of FIG. 3.

In operation 1020, when a rotation of the rotatable input device is detected, a calculation on a moving distance of the rotatable input device starts based on the rotation.

In operation 1022, a coordinate (X2, Y2) moved to by the rotation of the rotatable input device is stored.

In operation 1024, the moving distance (z) of the ball is calculated using Equation 1 below.

$$Z=\sqrt{((X2-X1)^2+(Y2-Y1)^2)}$$

$$\dots (1)$$

In operation 1026, it is determined whether the moving distance of the ball is equal to or greater than a predetermined threshold value (Z). When the moving distance (z) of the ball is equal to or greater than the predetermined threshold value (Z), operation 1030 is performed, and when the moving distance (z) of the ball is less than the predetermined threshold value (Z), operation 1022 is performed.

The rotatable input device may be set up to complete an operation when a finger of a user is removed from the rotatable input device. When a roll operation is performed again after the finger is removed, the moving distance of the ball starts from a point at which the user contacted the rotatable input device again.

When it is determined that the moving distance of the ball is greater than the predetermined threshold value in operation 1026, an input is transmitted based on the rotation direction in operation 1030. In the current exemplary embodiment, a highlight is moved. In this case, a moving direction of the highlight is determined based on the rotation direction of the rotatable input device. When the rotatable input device rotates in an upper direction, an item one above a current item is highlighted, and when the rotatable input device rotates in a lower direction, an item below the current item is highlighted.

When the user continuously performs the roll operation, the location at the time the input is transmitted is stored as the current coordinate (X1, Y1) according to operation 1010, and the roll operation continues. In other words, after the input is transmitted, a start location is newly set up, and operations 1010 to 1030 are repeated. Also, the rotatable input device may be set up to complete an operation when the user removes a finger from the rotatable input device.

In operation 1040, a feedback signal is generated. When the highlight is moved, a feedback signal may be generated in order to inform the user that the highlight is moved. The feedback signal can be transmitted in various ways, such as visually, acoustically, and tactually.

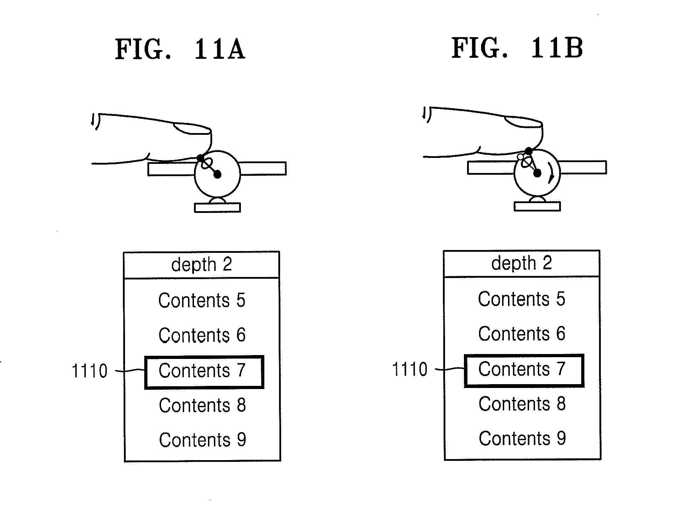

FIGS. 11A to 11E are diagrams for describing a method of operating a user interface using a rotatable input device in an interface mode that requires discontinuous inputs, according to an exemplary embodiment of the present invention.

In FIG. 11A, a user contacts the rotatable input device and prepares to start a roll operation. A current highlight box is located at Contents 7 1110.

In FIG. 11B, the user performs the roll operation using the rotatable input device. However, a moving distance of a ball of the rotatable input device as a result of the roll operation is less than a predetermined threshold value, and thus the highlight box does not move. Accordingly, the highlight box is still located at Contents 7 1110.

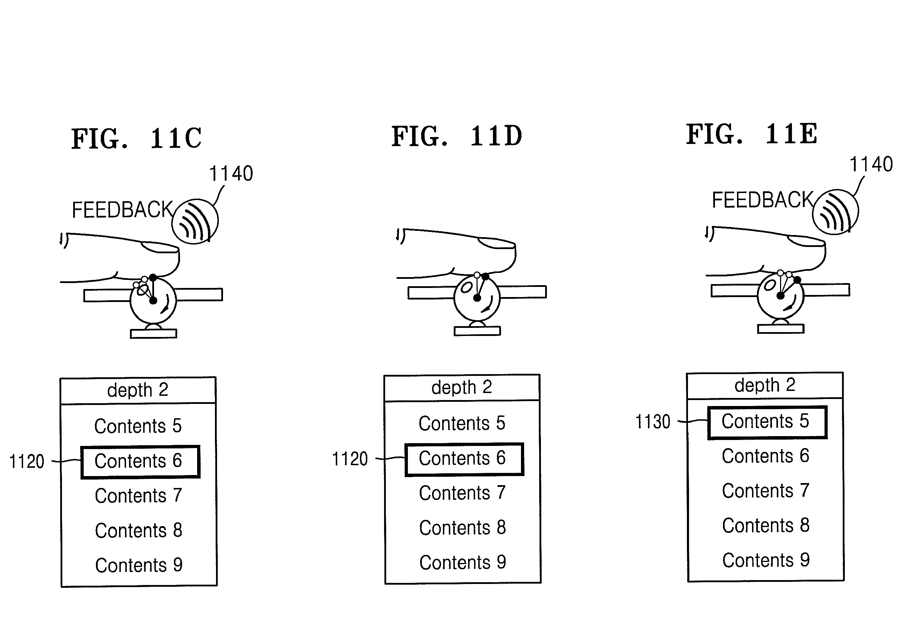

In FIG. 11C, the user performs the roll operation using the rotatable input device. The moving distance of the ball is equal to greater than the predetermined threshold value, and thus the highlight box moves based on the rotation direction of the ball. In the current exemplary embodiment, the highlight moves up when the ball rotates upward, and thus the highlight box moves to Contents 6 1120.

Simultaneously, a feedback signal 1140, which informs the user that the input has been transmitted, may be transmitted through the rotatable input device. The feedback signal can be realized visually, acoustically, or tactually, such as noise, light, and a clicking sense.

In FIG. 11D, the user continues to perform the roll operation. When the moving distance of the ball is equal to or greater than the predetermined threshold value, an input is transmitted, and the location at the time the input is transmitted is stored as a new start location. When the user continues to perform the roll operation, it is determined whether the moving distance of the ball from the newly stored start location is equal to or greater than the predetermined threshold value. In FIG. 11D, the moving distance of a ball is less than the predetermined threshold value, and thus the highlight box remains at Contents 6 1120.

In FIG. 11E, the moving distance of the ball from the new start location is equal to or greater than the predetermined threshold value, and thus the highlight box moves. Accordingly, the highlight box moves to Contents 5 1130.

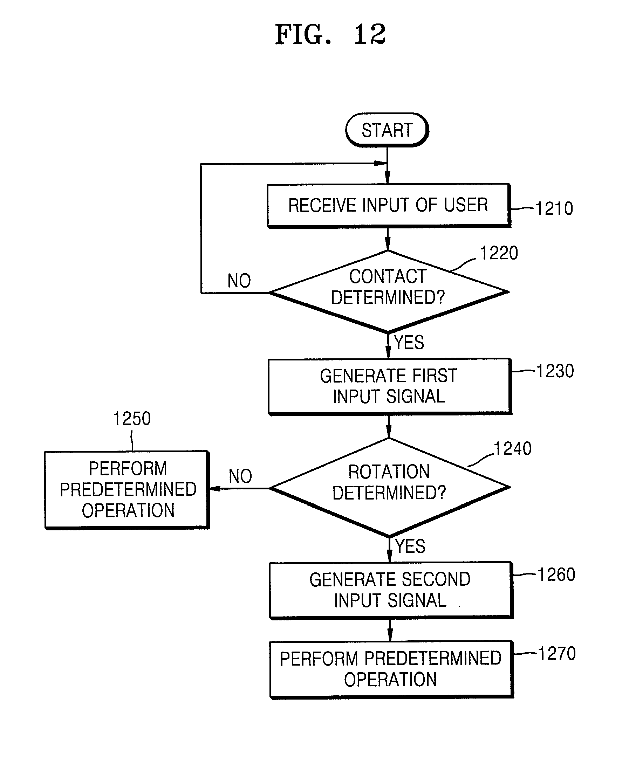

FIG. 12 is a flowchart illustrating a method of operating a user interface using a rotatable input device, according to an exemplary embodiment of the present invention.

In operation 1210, an input of a user is received.

In operation 1220, it is determined whether the user contacts one side of the rotatable input device. When it is determined that the user has not contacted the one side of the rotatable input device, operation 1210 is performed and when it is determined that the user has contacted the one side of the rotatable input device, operation 1230 is performed.

When it is determined that the user has contacted the one side of the rotatable input device in operation 1220, a first input signal is generated in operation 1230.

In operation 1240, it is determined whether the rotatable input device has rotated.

When it is determined that the rotatable input device has rotated, a predetermined operation is performed based on the first input signal in operation 1250.

When it is determined that the rotatable input device has rotated, a second input signal is generated in operation 1260.

In operation 1270, the rotatable input device performs a predetermined operation based on the first and second input signals.

The present invention can also be embodied as computer programs and can be implemented in general-use digital computers that execute the programs using a computer readable recording medium. Examples of the computer readable recording medium include magnetic storage media (e.g., ROM, floppy disks, hard disks, etc.), and optical recording media (e.g., CD-ROMs, or DVDs).

According to the exemplary embodiments of the present invention, a category mode, a one-dimensional interface mode, a two-dimensional interface mode, a three-dimensional interface mode, and a personal computer application can be applied in the same physical interface.

Embodiments of the present invention can be miniaturized and installed in a miniature mobile device, or the like. Accordingly, embodiments of the present invention can be applied in various fields.

According to preferred embodiments of the present invention, content that is to be searched for change can be easily searched for using one input device. Also, in spite of the input device performing various complex functions, the user can manipulate the content without confusion.

Using the input device of preferred embodiments of the present invention, the user can manipulate content in various forms without changing the input device. The input device can be applied in various fields, from a portable device to a television remote control. Moreover, the input device can be applied in consumer electronics products, from a miniature media player to a television.

While the present invention has been particularly shown and described with reference to exemplary embodiments thereof, it will be understood by those of ordinary skill in the art that various changes in form and details may be made therein without departing from the spirit and scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A device for a user interface, the device comprising:

   a rotatable input device (310) which is manipulated by a user;
   a contact detection device (350) which detects whether the user contacts the rotatable input device and generates a first input signal if it is detected that that the user contacts the rotatable input device;
   a rotation detection device (330) which detects a rotation of the input device and generates a second input signal if the rotation of the input device is detected; and
   a control device (240) which performs an operation based on at least one of the first and second input signals.

2. The device of claim 1, wherein the contact detection device (350) comprises a voltage regulator type sensor.

3. The device of claim 1 or claim 2, wherein the rotatable input device (310) comprises a ball.

4. The device of any preceding claim, further comprising a click detection device (340) which detects whether the rotatable input device (310) is pressed and generates a third input signal if it is detected that the rotatable input device pressed, wherein the control device (240) performs the operation further based on the third input signal.

5. The device of any preceding claim, further comprising:

   an upper part (320) which supports the rotatable input device; and
   a lower part which is engaged with the upper part and supports the rotatable input device,

   wherein the lower part comprises a click detection device (340) which detects whether the upper part is pressed and generates a third input signal if it detected that the upper part is pressed, and
   the control device (240) performs the operation further based on the third input signal.

6. The device of any preceding claim, further comprising a display device which displays information to a user based on operation of the control device.

7. The device of claim 6, wherein the control device (240) displays help information, related to operations that can be performed via the rotatable input device, on the display device, if only the first input signal is generated.

8. The device of claim 6, wherein the second input signal is a direction key signal corresponding to a movement of the rotatable input device (310).

9. The device of claim 8, wherein the control device (240) moves a current location displayed on the display device based on the second input signal, if the first input signal and the second input signal are concurrently generated and an amount of rotation of the rotatable input device (310) is greater than a threshold value.

10. The device of claim 9, wherein the control device (240) transmits a feedback signal indicating that the corresponding operation has been performed, if the current location displayed on the display device is moved based on the second input signal, and

wherein the control device continuously moves a current location displayed on the display device based on the second input signal, if the second input signal is no longer generated and only the first input signal is generated after the first and second input signals are generated concurrently.

11. The device of claim 6, wherein the control device (240) selects an item corresponding to a current location displayed on the display device, if the first input signal and the third input signal are concurrently generated, and wherein the control device displays information about detailed items on the display device, if the first and third input signals are continuously generated for at least a threshold time.

12. The device of claim 11, wherein the control device (240) moves to an upper category of an item that is currently being displayed on the display device, if the first and third input signals are continuously generated for at least a threshold time.

13. The device of claim 6, wherein the control device (240) selects all items corresponding to a movement route of a current location on the display device based on the second input signal, if the first, second, and third input signals are concurrently generated.

14. The device of claim 6, wherein the control device (240) enlarges or reduces an item that is being displayed based on the second input signal, if the first, second, and third input signals are concurrently generated.

15. The device of claim 14, wherein the control device (240) enlarges the item if the second input signal is generated by the rotatable input device (310) rotating in a direction corresponding to a first area, and reduces the item if the second input signal is generated by the rotatable input device rotating in a direction corresponding to a second area.

16. The device of claim 6, wherein the control device (240) displays a part, which was not displayed on the display device, on the display device if the first, second, and third input signals are concurrently generated.

17. A method of operating a user interface, the method comprising:

detecting whether a user has contacted one side of a rotatable input device (310);
generating a first input signal if it is detected that that the user contacts the rotatable input device;
detecting a rotation of the rotatable input device;
generating a second input signal if the rotation is detected; and
performing an operation based on at least one of the first and second input signals.

18. The method of claim 17, further comprising:

detecting whether the rotatable input device (310) is pressed; and
generating a third input signal if it is detected that the rotatable input device is pressed,

wherein the performing the operation comprises performing the operation further based on the third input signal.

19. The method of claim 18, wherein the performing the operation comprises displaying help information related to operations that can be performed via the rotatable input device if only the first input signal is generated, moving a current location based on the second input signal if the first and second input signals are concurrently generated, and continuously moving a current location based on the second input signal if only the first input signal is generated after the first and second input signals are concurrently generated.

20. The method of claim 18, wherein the performing the operation comprises performing a corresponding operation according to at least one mode set based on an interface.

21. The method of claim 20, wherein, if the mode is a one-dimensional interface mode, the performing the operation comprises selecting a current item corresponding to a current location displayed if the first input signal and the third input signal are concurrently generated, moving to an upper category of the current item if the first and third input signals are continuously generated for at least a threshold time, and selecting a plurality of items based on the second input signal if the first, second, and third input signals are concurrently generated.

22. The method of claim 20, wherein, if the mode is a two-dimensional interface mode, the performing the operation comprises selecting a current item if the first and third input signals are concurrently generated, displaying information about detailed items if the first and third input signals are continuously generated for at least a threshold time, and selecting a plurality of items based on the second input signal if the first, second, and third input signals are concurrently generated.

23. The method of claim 20, wherein, if the mode is a search interface mode, the performing the operation comprises selecting a current item if the first and third input signals are concurrently generated, displaying information about detailed items if the first and third input signals are continuously generated for at least a threshold time, and displaying a part, which could not be displayed on a screen that is currently being displayed, based on the second input signal if the first, second, and third input signals are simultaneously generated.

24. The method of claim 20, wherein, if the mode is a three-dimensional interface mode, the performing the operation comprises selecting a current item if the first and third input signals are concurrently generated, displaying information about detailed items if the first and third input signals are continuously generated for at least a threshold time, and enlarging or reducing an item that is being displayed based on the second input signal if the first, second, and third input signals are concurrently generated.

25. A computer readable recording medium having recorded thereon a program for executing a method of operating a user interface, the method comprising:

    detecting whether a user has contacted one side of a rotatable input device (310);
    generating a first input signal if it is detected that that the user contacts the rotatable input device;
    detecting a rotation of the rotatable input device;
    generating a second input signal if the rotation is detected; and
    performing a first operation based on at least one of the first and second input signals.

## FIG. 1A (PRIOR ART)

## FIG. 1B (PRIOR ART)

# FIG. 2

220

CONTACT
DETECTION DEVICE

210

INPUT DEVICE

230

ROTATION
DETECTION DEVICE

240

CONTROL DEVICE

# FIG. 3A

# FIG. 3B

## FIG. 3C

BALL (310)   UPPER PART
(320)

CONTACT DETECTION
DEVICE (350)

CLICK DETECTION
DEVICE (340)

332

334

ROTATION
DETECTION DEVICE
(330)

CONTACT DETECTION
DEVICE (350)   CLICK DETECTION
DEVICE (340)

BALL (310)   334   332

ROTATION
DETECTION DEVICE
(330)

## FIG. 3D

391

392

393

FIG. 4

START

CONTACT DETECTED? — 410
YES
ON-STATE — 412

CLICK DETECTED? — 420
YES
CLICK CONTINUES WITHOUT ROTATION? — 430
NO → ROTATION DETECTED? — 440

YES → CONTACT COMPLETED? — 432
YES → LONG CLICK OPERATION — 434

CONTACT COMPLETED? — 450
NO
YES → SHORT CLICK OPERATION — 452

ROTATION DETECTED? — 460
YES → PERFORM PRESS & ROLL OPERATION — 462
NO
CONTACT COMPLETED? — 464
YES → END PRESS & ROLL OPERATION — 466

ROTATION DETECTED? — 440
YES → PERFORM ROLL OPERATION — 442
CONTACT COMPLETED? — 470
YES → END ROLL OPERATION — 472

CONTACT CONTINUES WITHOUT ROTATION FOR PREDETERMINED TIME? — 480
NO
YES → PERFORM ROLL CONTINUANCE OPERATION — 482
CONTACT COMPLETED? — 484
YES

# FIG. 5A
NORMAL

RELEASED

# FIG. 5B
ON

RELEASED

# FIG. 5C
PRESS

RELEASED → PRESSED

# FIG. 5D
RELEASE

PRESSED → RELEASED

# FIG. 5E
SHORT CLICK

RELEASED → PRESSED → RELEASED

# FIG. 5F
LONG CLICK

RELEASED → PRESSED → RELEASED
(CONTINUANCE)

# FIG. 5G
ROLL

ROLL

RELEASED

# FIG. 5H
ROLL CONTINUANCE

ROLL

RELEASED

# FIG. 5I
PRESS &ROLL

ROLL

RELEASED → PRESSED → RELEASED

EP 1 986 081 A1

FIG. 6A

depth 2

Contents 5 ~612
Contents 6
Contents 7
Contents 8
Contents 9 ~612

FIG. 6B

ROLL

: SEARCH FOR ITEMS
IN SAME CATEGORY

depth 2

Contents 5
Contents 6
Contents 7 ~622
Contents 8
Contents 9

CURRENT STATE

depth 2

Contents 5
624 — Contents 6
Contents 7
Contents 8
Contents 9

SEARCH FOR
PREVIOUS ITEM

FIRST AREA (627)

SECOND AREA (628)

depth 2

Contents 5
Contents 6
Contents 7
Contents 8 ~626
Contents 9

SEARCH FOR PRECEDING ITEM

# FIG. 6C

ROLL CONTINUANCE

: SEARCH FOR ITEMS IN
SAME CATEGORY

| depth 2 |
|---|
| Contents 5 |
| Contents 6 |
| Contents 7 |
| Contents 8 |
| Contents 9 |

—632

CURRENT STATE

| depth 2 |
|---|
| Contents 3 |
| Contents 4 |
| Contents 5 |
| Contents 6 |
| Contents 7 |

>634

CONTINUAL SEARCH
FOR PREVIOUS ITEMS

| depth 2 |
|---|
| Contents 7 |
| Contents 8 |
| Contents 9 |
| Contents 10 |
| Contents 11 |

>636

CONTINUAL SEARCH FOR
PRECEDING ITEMS

# FIG. 6D

| depth 2 |
|---------|
| Contents 5 |
| Contents 6 |
| Contents 7 — 642 |
| Contents 8 |
| Contents 9 |

CURRENT STATE

PRESS & ROLL

: SELECT PLURALITY OF ITEMS

| depth 2 |
|---------|
| Contents 3 |
| Contents 4 |
| Contents 5 |
| Contents 6 |
| Contents 7 |

644

SELECT PLURALITY
OF UPPER ITEMS

| depth 2 |
|---------|
| Contents 7 |
| Contents 8 |
| Contents 9 |
| Contents 10 |
| Contents 11 |

646

SELECT PLURALITY
OF LOWER ITEMS

# FIG. 6E

SHORT CLICK

: LOWER CATEGORY (SELECT)

| depth 2 |
|---|
| Contents 5 |
| Contents 6 |
| Contents 7 —652 |
| Contents 8 |
| Contents 9 |

CURRENT STATE

| depth 3 — 654 |
|---|
| Contents 1 |
| Contents 2 |
| Contents3 |
| Contents 4 |
| Contents 5 |

MOVE TO LOWER CATEGORY

# FIG. 6F

LONG CLICK

: UPPER CATEGORY

| depth 2 |
|---|
| Contents 5 |
| Contents 6 |
| Contents 7 —662 |
| Contents 8 |
| Contents 9 |

CURRENT STATE

| depth 1 —664 |
|---|
| Contents 1 |
| Contents 2 |
| Contents3 |
| Contents 4 |
| Contents 5 |

MOVE TO UPPER CATEGORY

# FIG. 7A

712

712

710

# FIG. 7B

ROLL

: MOVE UP, DOWN,
LEFT, RIGHT

FIRST AREA (726)

722

MOVE TO
UPPER ITEM

721

CURRENT STATE

725

723

MOVE TO ITEM ON LEFT

SECOND AREA (727)

MOVE TO ITEM ON RIGHT

FOURTH AREA (729)

724

MOVE TO LOWER ITEM

THIRD AREA (728)

# FIG. 7C

ROLL CONTINUANCE

: CONTINUOUSLY MOVE
TO SAME DIRECTION

FIRST AREA (726)

731

CURRENT STATE

732

CONTINUOUSLY MOVE
TO UPPER ITEM

SECOND AREA (727)

733

CONTINUOUSLY MOVE
TO ITEM ON LEFT

FOURTH AREA (729)

735

CONTINUOUSLY MOVE
TO ITEM ON RIGHT

734

CONTINUOUSLY MOVE
TO LOWER ITEM

THIRD AREA (728)

736

737

# FIG. 7D

PRESS & ROLL

741

: SELECT PLURALITY
OF ITEMS

CURRENT STATE

FIRST AREA (726)

742

SELECT PLURALITY
OF UPPER ITEMS

SECOND AREA (727)

743

SELECT PLURALITY
OF ITEMS ON LEFT

FOURTH AREA (729)

745

SELECT PLURALITY OF
ITEMS ON RIGHT

SELECT PLURALITY OF LOWER ITEMS

744

THIRD AREA (728)

746

747

# FIG. 7E

SHORT CLICK

: SELECT
CORRESPONDING ITEM

751

CURRENT STATE

752

SELECT

# FIG. 7F

LONG CLICK

: OPTION (POPUP)

761

CURRENT STATE

762

SELECT OPTION OF
CORRESPONDING ITEM

# FIG. 8A

ROLL

: MOVE UP, DOWN, LEFT, RIGHT

821

CURRENT STATE

822

FREELY MOVE 2D CURSOR

# FIG. 8B

ROLL CONTINUANCE

: CONTINUOUSLY MOVE TO FINAL
  DIRECTION OF CURSOR

831

CURRENT STATE

832

CONTINUOUSLY MOVE TO
FINAL DIRECTION OF CURSOR

FIG. 8C

842

841

842

841

# FIG. 8D

SHORT CLICK

: SHORT CLICK

851

CURRENT STATE

852    851

SELECT

# FIG. 8E

LONG CLICK

: OPTION (POPUP)

861

CURRENT STATE

861

862

SELECT OPTION OF
CORRESPONDING ITEM

# FIG. 9A

912

912

# FIG. 9B

ROLL

: ROTATE SPHERE

921

CURRENT STATE

922

ROTATE SPHERE FREELY

## FIG. 9C

ROLL CONTINUANCE

: CONTINUE ROTATION
TO FINAL DIRECTION

931

CURRENT STATE

932

932

CONTINUE ROTATION
TO FINAL DIRECTION

## FIG. 9D

PRESS & ROLL

: ENLARGE, REDUCE

941

CURRENT STATE

FIRST AREA (944)

942

SECOND AREA (945)

943

# FIG. 9E

SHORT CLICK

: SELECT CORRESPONDING
SECTION

951

CURRENT STATE

952

SELECT CORRESPONDING
SECTION

# FIG. 9F

LONG CLICK

: OPTION (POPUP)

961

CURRENT STATE

962

SELECT OPTION OF
CORRESPONDING SECTION

# FIG. 10

START

STORE CURRENT
COORDINATE X1, Y1 — 1010

START CALCULATING
MOVING DISTANCE OF BALL — 1020

STORE MOVED
COORDINATE X2, Y2 — 1022

CALCULATE MOVING DISTANCE
OF BALL z, WHERE,

$$z = \sqrt{(X_2 - X_1)^2 + (Y_2 - Y_1)^2}$$ — 1024

IS z EQUAL TO OR
LARGER THAN A PREDETERMINED
DISTANCE Z? — 1026

NO

YES

TRANSMIT INPUT OF
CORRESPONDING DIRECTION — 1030

GENERATE FEEDBACK SIGNAL
(VISUAL, TACTUAL, ACOUSTICAL) — 1040

# FIG. 11A

| depth 2 |
|---|
| Contents 5 |
| Contents 6 |
| **Contents 7** |
| Contents 8 |
| Contents 9 |

1110

# FIG. 11B

| depth 2 |
|---|
| Contents 5 |
| Contents 6 |
| **Contents 7** |
| Contents 8 |
| Contents 9 |

1110

FIG. 11E

1140

FEEDBACK

1130

| depth 2 |
|---|
| Contents 5 |
| Contents 6 |
| Contents 7 |
| Contents 8 |
| Contents 9 |

FIG. 11D

1120

| depth 2 |
|---|
| Contents 5 |
| Contents 6 |
| Contents 7 |
| Contents 8 |
| Contents 9 |

FIG. 11C

1140

FEEDBACK

1120

| depth 2 |
|---|
| Contents 5 |
| Contents 6 |
| Contents 7 |
| Contents 8 |
| Contents 9 |

# FIG. 12

START

RECEIVE INPUT OF USER ── 1210

CONTACT DETERMINED? ── 1220

NO

YES

GENERATE FIRST INPUT SIGNAL ── 1230

1250

PERFORM PREDETERMINED OPERATION

NO

ROTATION DETERMINED? ── 1240

YES

GENERATE SECOND INPUT SIGNAL ── 1260

PERFORM PREDETERMINED OPERATION ── 1270

**European Patent Office**

**EUROPEAN SEARCH REPORT**

Application Number

EP 08 10 0330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 6 396 477 B1 (HINCKLEY KENNETH P [US] ET AL) 28 May 2002 (2002-05-28)<br><br><br>* abstract; figures 1-32 *<br>* column 1, line 50 - column 2, line 15 *<br>* column 4, lines 4-9,31-53 *<br>* column 5, lines 33-38 *<br>* column 6, lines 33-43 *<br>* column 7, lines 5-9 *<br>* column 9, line 55 - column 10, line 28 *<br>* column 11, lines 45-59 *<br>* column 12, lines 11-50 *<br>* column 13, lines 45-53 *<br>* column 14, lines 49-62 *<br>* column 15, lines 55-61 *<br>* column 16, line 51 - column 17, line 8 *<br>* column 17, lines 63,64 *<br>----- | 1-3,6,8,<br>17,25<br>4,5,<br>9-16,<br>18-24 | INV.<br>G06F3/033<br>G06F3/048 |
| X | EP 1 241 558 A (MICROSOFT CORP [US]) 18 September 2002 (2002-09-18)<br>* abstract; figures 1-37 *<br>* paragraphs [0001] - [0012], [0016], [0020], [0023], [0027], [0028], [0031], [0032], [0037], [0057] - [0059], [0074] - [0083], [0089] *<br>* paragraphs [0103], [0106] - [0112] *<br>----- | 1-3,6-8,<br>17,25 | **TECHNICAL FIELDS SEARCHED (IPC)**<br><br>G06F<br>H04M |
| | -/-- | | |

The present search report has been drawn up for all claims

| Place of search | Date of completion of the search | Examiner |
|---|---|---|
| Munich | 26 June 2008 | Köhn, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

Application Number

EP 08 10 0330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HINCKLEY K ET AL: "TOUCH-SENSING INPUT DEVICES" 15 May 1999 (1999-05-15), CHI '99 CONFERENCE PROCEEDINGS HUMAN FACTORS IN COMPUTING SYSTEMS. PITTSBURGH, PA, MAY 15 - 20, 1999; [CHI CONFERENCE PROCEEDINGS. HUMAN FACTORS IN COMPUTING SYSTEMS], NEW YORK, NY : ACM, US, PAGE(S) 223 - 230 , XP000894222 ISBN: 978-0-201-48559-2 * abstract; figure 1; table 1 * * column 1, lines 35-40 * * column 2, lines 7-26 * * column 3, lines 15-25 * * column 4, lines 13-15 * * column 6, line 34 - column 7, line 10 * * column 8, lines 24-31 * * column 10, line 55 - column 11, line 33 * ----- | 1-3,17, 25 | |
| X | WO 03/091934 A (SONY ERICSSON MOBILE COMM AB [SE]; KLINGHULT GUNNAR [SE]) 6 November 2003 (2003-11-06) * abstract; figures 1,2 * * page 2, line 19 - page 3, line 34 * ----- | 1-3,17, 25 | TECHNICAL FIELDS SEARCHED (IPC) |
| Y | EP 1 009 142 A (NOKIA MOBILE PHONES LTD [FI] NOKIA CORP [FI]) 14 June 2000 (2000-06-14) * abstract; figures 1-6 * * paragraphs [0006], [0013], [0015], [0017], [0021] - [0027], [0029] - [0036], [0039] - [0044] * ----- -/-- | 4,5, 9-16, 18-24 | |

The present search report has been drawn up for all claims

| Place of search | Date of completion of the search | Examiner |
|---|---|---|
| Munich | 26 June 2008 | Köhn, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 08 10 0330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "DEVICE FOR EASY POINT-AND-DRAG AND POINT-AND-CLICK APPLICATIONS" 1 August 1995 (1995-08-01), IBM TECHNICAL DISCLOSURE BULLETIN, IBM CORP. NEW YORK, US, PAGE(S) 163 , XP000534473 ISSN: 0018-8689 * the whole document * | 1-25 | |
| A | DE 196 42 812 A1 (WOLKOWSKI FRANK [DE]) 23 April 1998 (1998-04-23) * abstract; figures 1,2 * * column 1, lines 22-53 * | 1-25 | |
| A | US 2007/080946 A1 (FYKE STEVEN H [CA] ET AL) 12 April 2007 (2007-04-12) * abstract; figures 1-10 * * paragraphs [0042], [0044] * | 3-5,9,18 | |
| A | EP 1 168 147 A (NOKIA MOBILE PHONES LTD [FI] NOKIA CORP [FI]) 2 January 2002 (2002-01-02) * abstract; figures 1-7 * * paragraphs [0018], [0019], [0024], [0026] * | 11,12, 21-24 | TECHNICAL FIELDS SEARCHED (IPC) |
| A | GB 2 349 725 A (SAMSUNG ELECTRONICS CO LTD [KR]) 8 November 2000 (2000-11-08) * the whole document * | 11,12, 21-24 | |

The present search report has been drawn up for all claims

| Place of search | Date of completion of the search | Examiner |
|---|---|---|
| Munich | 26 June 2008 | Köhn, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 10 0330

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2008

| Patent document cited in search report | | Publication date | Patent family member(s) | | Publication date |
|---|---|---|---|---|---|
| US 6396477 | B1 | 28-05-2002 | US | 6559830 B1 | 06-05-2003 |
| EP 1241558 | A | 18-09-2002 | JP | 2002287862 A | 04-10-2002 |
| WO 03091934 | A | 06-11-2003 | AU | 2003233982 A1 | 10-11-2003 |
| EP 1009142 | A | 14-06-2000 | FI | 982647 A | 09-06-2000 |
| | | | US | 6571086 B1 | 27-05-2003 |
| DE 19642812 | A1 | 23-04-1998 | NONE | | |
| US 2007080946 | A1 | 12-04-2007 | NONE | | |
| EP 1168147 | A | 02-01-2002 | GB | 2364208 A | 16-01-2002 |
| | | | JP | 2002062973 A | 28-02-2002 |
| | | | US | 2002054153 A1 | 09-05-2002 |
| GB 2349725 | A | 08-11-2000 | CN | 1269682 A | 11-10-2000 |
| | | | CN | 1782967 A | 07-06-2006 |
| | | | KR | 20000065414 A | 15-11-2000 |
| | | | US | 2006019717 A1 | 26-01-2006 |

EPO FORM P0459

For more details about this annex : see Official Journal of the European Patent Office, No. 12/82